# EUROPÄISCHE PATENTSCHRIFT

(11) **EP 4 269 191 B1**
(45) Veröffentlichungstag und Bekanntmachung des Hinweises auf die Patenterteilung: **31.12.2025**
(21) Anmeldenummer: 23157053.2
(22) Anmeldetag: 16.02.2023
(51) Int. Cl.: B60T 7/04, B60T 7/12, B60T 13/74

(54) **VERFAHREN ZUM BETREIBEN EINER BREMSANLAGE FÜR EIN KRAFTFAHRZEUG SOWIE ENTSPRECHENDE BREMSANLAGE**
METHOD FOR OPERATING A BRAKE SYSTEM FOR A MOTOR VEHICLE AND CORRESPONDING BRAKE SYSTEM
PROCÉDÉ DE FONCTIONNEMENT D'UN SYSTÈME DE FREINAGE POUR UN VÉHICULE AUTOMOBILE ET SYSTÈME DE FREINAGE CORRESPONDANT

(30) Priorität: 26.04.2022 DE 102022110059
(43) Veröffentlichungstag der Anmeldung: 01.11.2023
(73) Patentinhaber: Audi AG, 85045 Ingolstadt (DE)
(72) Erfinder: Petersen, Krister, 85057 Ingolstadt (DE)

(56) Entgegenhaltungen:
- GB-A- 2 483 719
- US-A1- 2018 345 921
- US-A1- 2021 009 092
- US-B1- 6 626 271
- US-B1- 8 924 105

## Beschreibung

Die Erfindung betrifft ein Verfahren zum Betreiben einer Bremsanlage für ein Kraftfahrzeug, wobei die Bremsanlage eine Feststellbremseinrichtung aufweist und ein Ansteuern der Feststellbremseinrichtung zum Erzeugen einer Feststellbremskraft auf ein Rad des Kraftfahrzeugs nur bei einem Unterschreiten eines Geschwindigkeitsschwellenwerts durch einen Geschwindigkeitswert zugelassen wird, wobei der Geschwindigkeitswert aus einem zumindest zeitweise mit einer Geschwindigkeit des Kraftfahrzeugs korrespondierenden Geschwindigkeitsmesswert ermittelt wird. Die Erfindung betrifft weiterhin eine Bremsanlage für ein Kraftfahrzeug.

Aus dem Stand der Technik ist beispielsweise die Druckschrift DE 10 2014 018 365 A1 bekannt. Diese beschreibt ein Verfahren zum Einlegen einer elektrischen Feststellbremsvorrichtung eines Kraftfahrzeugs, das mit einem handbetätigten Not-Aus-Betätigungselement und einer Trennvorrichtung zum Trennen eines elektrischen Spannungsversorgers vom Bordnetz infolge einer Betätigung des Not-Aus-Betätigungselements ausgestattet ist. Das Verfahren umfasst die Schritte (a) wenn eine Geschwindigkeit des Kraftfahrzeugs bei Betätigung des Not-Aus-Betätigungselements nicht größer als ein vorbestimmter erster Schwellenwert ist, dann: (a1) Einlegen der elektrischen Feststellbremse und (a2) Einstellen einer Verzögerungszeit der Trennvorrichtung auf einen ersten Wert; und (b) wenn die Geschwindigkeit des Kraftfahrzeugs bei Betätigung des Not-Aus-Betätigungselements größer als der vorbestimmte erste Schwellenwert ist, dann: (b1) Einstellen der Verzögerungszeit der Trennvorrichtung auf einen zweiten Wert, der größer als der erste Wert ist, (b2) Ermittlung einer Bremsanforderung an die elektrische Betriebsbremse und (b3) Einlegen der elektrischen Feststellbremse, sobald eine Geschwindigkeit des Kraftfahrzeugs kleiner gleich einem vorbestimmten zweiten Schwellenwert ist.

Die Druckschrift US 8 924 105 B1 betrifft ein Verfahren zum Verringern einer Geschwindigkeit eines Fahrzeugs, indem eine Fahrzeugstoppanweisung in Reaktion auf ein während einer Bewegung des Fahrzeugs empfangenes Fahrzeugsignal eingeleitet wird. Das Verfahren beinhaltet: Anlegen der Radbremse in Reaktion auf die Fahrzeugstoppanweisung um die Fahrzeuggeschwindigkeit zu verringern während sich das Fahrzeug mit einer Fahrzeuggeschwindigkeit bewegt, die kleiner als oder gleich einem ersten Fahrzeuggeschwindigkeitsgrenzwert ist; und Betätigen einer Parkvorrichtung um eine Drehbewegung eines Ausgangselements eines Getriebes zu stoppen, wenn die Fahrzeuggeschwindigkeit kleiner als oder gleich einem zweiten Fahrzeuggeschwindigkeitsgrenzwert ist.

Es ist Aufgabe der Erfindung, ein Verfahren zum Betreiben einer Bremsanlage für ein Kraftfahrzeug vorzuschlagen, welches gegenüber bekannten Verfahren Vorteile aufweist, insbesondere das Ansteuern der Feststellbremseinrichtung zuverlässig nur dann zulässt, wenn die Geschwindigkeit des Kraftfahrzeugs hinreichend gering ist.

Dies wird erfindungsgemäß mit einem Verfahren zum Betreiben einer Bremsanlage für ein Kraftfahrzeug mit den Merkmalen des Anspruchs 1 erreicht. Dabei ist vorgesehen, dass bei einem Unterschreiten des Geschwindigkeitswerts durch den Geschwindigkeitsmesswert der Geschwindigkeitswert dem Geschwindigkeitsmesswert mit einem auf einen Geschwindigkeitsgradientengrenzwert begrenzten Geschwindigkeitsgradienten nachgeführt wird, wobei bei Vorliegen eines Ansteuersignals die Feststellbremseinrichtung zum Vergrößern einer von ihr erzeugten Istfeststellbremskraft angesteuert wird, falls der Geschwindigkeitswert kleiner ist als der Geschwindigkeitsschwellenwert, und zum Verringern oder Konstanthalten der Istfeststellbremskraft angesteuert wird, falls der Geschwindigkeitswert größer oder gleich dem Geschwindigkeitsschwellenwert ist.

Vorteilhafte Ausgestaltungen mit zweckmäßigen Weiterbildungen der Erfindung sind in den abhängigen Ansprüchen angegeben.

Das Verfahren dient dem Betreiben der Bremsanlage. Diese ist vorzugsweise Bestandteil des Kraftfahrzeugs, kann jedoch selbstverständlich auch separat von diesem vorliegen. Die Bremsanlage dient einem Bremsen des Kraftfahrzeugs, also einer Reduzierung der Geschwindigkeit des Kraftfahrzeugs, insbesondere bis in den Stillstand, und/oder einem Festsetzen des Kraftfahrzeugs im Stillstand. Für ersteres weist die Bremsanlage beispielsweise eine Betriebsbremse auf, welche bevorzugt an allen Rädern des Kraftfahrzeugs eine Bremskraft bewirkt.

Zum Festsetzen des Kraftfahrzeugs im Stillstand verfügt die Bremsanlage über die Feststellbremseinrichtung. Diese wirkt bevorzugt lediglich auf einen Teil der Räder des Kraftfahrzeugs, zumindest lediglich auf das bereits erwähnte Rad. Das Rad ist bevorzugt Bestandteil mehrerer Räder, auf welche die Feststellbremseinrichtung die Feststellbremskraft zeitweise bewirkt. Beispielsweise bewirkt die Feststellbremseinrichtung die Feststellbremskraft lediglich auf Räder einer einzigen Radachse des Kraftfahrzeugs, insbesondere einer Hinterradachse oder einer Vorderradachse des Kraftfahrzeugs. Unter der Feststellbremskraft wird im Rahmen dieser Beschreibung eine von der Feststellbremseinrichtung bewirkte Bremskraft beziehungsweise die Bremskraft der Feststellbremseinrichtung verstanden.

Die mittels der Betriebsbremse bewirkte Bremskraft kann üblicherweise beliebig eingestellt werden. Sie wird hierbei bevorzugt derart gewählt, dass ein Blockieren des jeweiligen Rads zumindest zeitweise vermieden wird. Wird also ein solches Blockieren oder zumindest ein drohendes Blockieren erkannt, so wird die Bremskraft verringert, insbesondere bis das Blockieren nicht mehr auftritt beziehungsweise nicht mehr auf das drohende Blockieren erkannt wird. Hierzu verfügt die Bremsanlage beziehungsweise die Betriebsbremse bevorzugt über ein Antiblockiersystem. Die Feststellbremseinrichtung ermöglicht hingegen vorzugsweise lediglich das Einstellen einer auf das Blockieren des Rads beziehungsweise des jeweiligen Rads gerichteten Bremskraft. Durch das Ansteuern der Feststellbremse wird also das Rad blockiert, um das Kraftfahrzeug im Stillstand festzusetzen.

Aus diesem Grund soll das Ansteuern der Feststellbremseinrichtung vermieden werden, solange sich das Kraftfahrzeug in Bewegung befindet, also seine Fahrgeschwindigkeit von null verschieden ist oder zumindest dem Geschwindigkeitsschwellenwert entspricht oder größer ist als dieser. Folglich soll das Ansteuern der Feststellbremseinrichtung nur dann zugelassen werden, falls der Geschwindigkeitsschwellenwert durch den Geschwindigkeitswert unterschritten wird, der Geschwindigkeitswert also kleiner ist als der Geschwindigkeitsschwellenwert. Hierdurch wird ein Blockieren des Rads aufgrund des Ansteuerns der Feststellbremse während der Fahrt des Kraftfahrzeugs zuverlässig verhindert. Bei dem Vergleich des Geschwindigkeitswerts mit dem Geschwindigkeitsschwellenwert werden Absolutwerte miteinander verglichen, also der Absolutwert des Geschwindigkeitswerts mit dem Absolutwert des Geschwindigkeitsschwellenwerts, sodass ein vorzeichenunabhängiger Vergleich umgesetzt ist.

Um das Ansteuern der Feststellbremse in Abhängigkeit von dem Geschwindigkeitswert zuverlässig zuzulassen beziehungsweise unterbinden zu können, muss der Geschwindigkeitswert die tatsächliche Geschwindigkeit des Kraftfahrzeugs möglichst realistisch abbilden. Aus diesem Grund wird der Geschwindigkeitswert aus dem Geschwindigkeitsmesswert ermittelt, der zumindest zeitweise mit der Geschwindigkeit des Kraftfahrzeugs korrespondiert. Der Geschwindigkeitsmesswert ist ein Messwert, also ein mittels eines Sensors gemessener Wert. Er wird derart gemessen, dass er zumindest zeitweise mit der tatsächlichen Geschwindigkeit des Kraftfahrzeugs korrespondiert. Beispielsweise wird zunächst eine Raddrehzahl des Rads des Kraftfahrzeugs gemessen, insbesondere mittels eines Raddrehzahlsensors, und aus der Drehzahl der Geschwindigkeitsmesswert bestimmt.

Falls das Rad zum Zeitpunkt des Messens seiner Drehzahl jedoch blockiert, weicht der aus der Drehzahl ermittelte Geschwindigkeitsmesswert von der tatsächlichen Geschwindigkeit des Kraftfahrzeugs ab, mitunter deutlich. So ist bei einem vollständig blockierenden Rad die Drehzahl gleich null, sodass der Geschwindigkeitsmesswert ebenfalls gleich null ist. Folglich könnte in diesem Zustand die Feststellbremseinrichtung zum Erzeugen der Feststellbremskraft angesteuert werden, obwohl sich das Kraftfahrzeug weiter in Bewegung befindet.

Um dies zu vermeiden, wird der Geschwindigkeitswert nicht unmittelbar gleich dem Geschwindigkeitsmesswert gesetzt. Vielmehr ist es vorgesehen, den Geschwindigkeitswert dem Geschwindigkeitsmesswert zumindest zeitweise lediglich nachzuführen. Dies erfolgt derart, dass bei dem Unterschreiten des Geschwindigkeitswerts durch den Geschwindigkeitsmesswert der Geschwindigkeitswert an den begrenzten Geschwindigkeitsgradient angepasst wird. Ist also der Geschwindigkeitsmesswert kleiner als der Geschwindigkeitswert, so erfolgt das Anpassen des Geschwindigkeitswerts in Richtung des Geschwindigkeitsmesswerts lediglich mit dem begrenzten Geschwindigkeitsgradient.

Hierunter ist zu verstehen, dass der Geschwindigkeitsgradient über der Zeit berechnet wird, der bei einem unmittelbaren Setzen des Geschwindigkeitswerts auf den Geschwindigkeitsmesswert vorliegt. Ist dieser Geschwindigkeitsgradient größer als der Geschwindigkeitsgradientengrenzwert, so wird der Geschwindigkeitsgradient auf den Geschwindigkeitsgradientengrenzwert begrenzt und der Geschwindigkeitswert lediglich mit dem begrenzten Geschwindigkeitsgradienten in Richtung des Geschwindigkeitsmesswerts angepasst.

Das Begrenzen des Geschwindigkeitsgradienten erfolgt in Richtung größerer Geschwindigkeitsgradienten, sodass also der Geschwindigkeitsgradient nach oben auf den Geschwindigkeitsgradientengrenzwert begrenzt wird. Folglich ist der begrenzte Geschwindigkeitsgradient stets kleiner oder gleich dem Geschwindigkeitsgradientengrenzwert. Das Begrenzen erfolgt wiederum bevorzugt unter Verwendung von Absolutwerten, sodass also ein Absolutwert des Geschwindigkeitsgradienten auf den Absolutwert des Geschwindigkeitsgradientengrenzwerts begrenzt wird, um einen Einfluss des jeweiligen Vorzeichens zu vermeiden.

Überschreitet der Geschwindigkeitsmesswert den Geschwindigkeitswert, so kann es vorgesehen sein, den Geschwindigkeitswert unmittelbar gleich dem Geschwindigkeitsmesswert zu setzen, diesem also unmittelbar und ohne Begrenzung des Geschwindigkeitsgradienten nachzuführen. Auch andere Varianten sind jedoch möglich.

Die beschriebene Vorgehensweise hat den Vorteil, dass auch bei einem Geschwindigkeitsmesswert, der von der tatsächlichen Geschwindigkeit des Kraftfahrzeugs abweicht, das Ansteuern der Feststellbremse bei zu hoher Geschwindigkeit des Kraftfahrzeugs zuverlässig unterbunden werden kann. Hierzu wird angenommen, dass die Verzögerung des Kraftfahrzeugs, also eine Verringerung seiner Geschwindigkeit, nicht beliebig schnell erfolgen kann, sondern allenfalls mit dem dem Geschwindigkeitsgradientengrenzwert entsprechenden Geschwindigkeitsgradienten. Dies ist vor allem von Vorteil, falls das Kraftfahrzeug als Elektrokraftfahrzeug ausgestaltet ist. Bei einem solchen gibt es kein mechanisches Verhinderungssystem, beispielsweise schmiermitteldruckbasiert, das ein Ansteuern der Feststellbremseinrichtung, insbesondere der als Feststellsperre beziehungsweise Parksperre ausgebildeten Feststellbremseinrichtung, verhindern könnte.

Bevorzugt kommt die beschriebene Vorgehensweise zur Anwendung, insbesondere nur dann, falls die Drehzahl des Rads nicht zuverlässig bestimmt werden kann. Dies ist zum Beispiel der Fall, falls ein zum Messen der Drehzahl des Rads verwendeter Raddrehzahlsensor defekt ist und/oder unplausbible Werte für die Raddrehzahl des Rads liefert, oder falls ein dem Rad zugeordnetes Antiblockiersystem nicht oder zumindest nicht zuverlässig arbeitet. In ersterem Fall kann die Drehzahl des Rads nicht unmittelbar bestimmt werden, in letzterem Fall ist unklar, ob die mittels des Raddrehzahlsensors gemessene Raddrehzahl der tatsächlichen Drehzahl des Rads entspricht. Insbesondere könnte der Fall auftreten, dass das Rad blockiert, zum Beispiel aufgrund einer Bremskraftbeaufschlagung mittels der Betriebsbremse, und folglich eine Raddrehzahl gemessen wird, die kleiner ist, als die der momentanen Geschwindigkeit des Kraftfahrzeugs entsprechende Raddrehzahl, beispielsweise gleich null ist. Vor allem in den genannten Fällen kann mittels der beschriebenen Vorgehensweise ein fehlerhaftes Ansteuern der Feststellbremse zum Erzeugen der Feststellbremskraft zuverlässig vermieden werden.

Die Erfindung sieht vor, dass bei Vorliegen eines Ansteuersignals die Feststellbremseinrichtung zum Vergrößern einer von ihr erzeugten Istfeststellbremskraft angesteuert wird, falls der Geschwindigkeitswert kleiner ist als der Geschwindigkeitsschwellenwert, und zum Verringern oder Konstanthalten der Istfeststellbremskraft angesteuert wird, falls der Geschwindigkeitswert größer oder gleich dem Geschwindigkeitsschwellenwert ist. Unter dem Ansteuersignal ist ein auf das Ansteuern der Feststellbremseinrichtung gerichtetes Signal zu verstehen. Beispielsweise wird das Ansteuersignals in Abhängigkeit von einer Vorgabe eines Benutzers des Kraftfahrzeugs erzeugt, insbesondere in Abhängigkeit von einer Einstellung eines Bedienelements des Kraftfahrzeugs. Vorzugsweise wird bei einer ersten Einstellung des Bedienelements das Ansteuersignals nicht erzeugt und bei einer zweiten Einstellung erzeugt.

In Abhängigkeit von dem Ansteuersignals erfolgt das Ansteuern der Feststellbremseinrichtung. Vorzugsweise ist es vorgesehen, dass bei Nichtvorliegen des Ansteuersignals die Feststellbremseinrichtung zum Verringern der Istfeststellbremskraft angesteuert wird, insbesondere zum Verringern der Istfeststellbremskraft bis auf null. Liegt hingegen das Ansteuersignal vor, so wird der Geschwindigkeitswert mit dem Geschwindigkeitsschwellenwert verglichen. Ist der Geschwindigkeitswert kleiner als der Geschwindigkeitsschwellenwert, so wird die Feststellbremseinrichtung zum Vergrößern der Istfeststellbremskraft angesteuert, nämlich zum Vergrößern der Istfeststellbremskraft in Richtung der Feststellbremskraft, vorzugsweise bis auf die Feststellbremskraft.

Entspricht hingegen der Geschwindigkeitswert dem Geschwindigkeitsschwellenwert zumindest, ist er also größer als der Geschwindigkeitsschwellenwert oder gleich dem Geschwindigkeitsschwellenwert, so soll die Feststellbremseinrichtung zum Verringern oder Konstanthalten der Istfeststellbremskraft angesteuert werden, vorzugsweise ersteres. Besonders bevorzugt wird die Feststellbremseinrichtung diesem Fall zum Verringern der Istfeststellbremskraft bis auf null angesteuert. Hierdurch wird das das bereits erläuterte vorteilhafte Verhalten der Bremsanlage erzielt.

Eine Weiterbildung der Erfindung sieht vor, dass der Geschwindigkeitsmesswert zumindest zeitweise aus einer mittels eines Raddrehzahlsensors gemessenen Raddrehzahl, und/oder zumindest zeitweise aus einer Drehzahl eines an die Radachse antriebstechnisch angeschlossenen Antriebsaggregats ermittelt wird. Auf die Verwendung der Raddrehzahl zum Ermitteln des Geschwindigkeitsmesswerts wurde bereits hingewiesen. Zusätzlich oder alternativ kann der Geschwindigkeitsmesswert zumindest zeitweise aus der Drehzahl des Antriebsaggregats bestimmt werden.

Das Antriebsaggregat ist an die Radachse antriebstechnisch angeschlossen und insoweit zumindest zeitweise antriebstechnisch mit ihr gekoppelt, vorzugsweise starr. Das bedeutet, dass die Drehzahl des Antriebsaggregats zumindest zeitweise proportional zu der Drehzahl des Rads ist. Entsprechend korrespondiert die Drehzahl des Antriebsaggregats zumindest zeitweise mit der Geschwindigkeit des Kraftfahrzeugs und kann zur Ermittlung des Geschwindigkeitsmesswerts herangezogen werden. Auch bei dieser Vorgehensweise kann der Geschwindigkeitsmesswert jedoch von der tatsächlichen Geschwindigkeit des Kraftfahrzeugs abweichen, insbesondere bei blockierendem Rad. Aus diesem Grund ist das beschriebene Nachführen des Geschwindigkeitswerts in Abhängigkeit von dem Geschwindigkeitsmesswert in jedem Fall der Sicherheit des Kraftfahrzeugs zuträglich.

Eine Weiterbildung der Erfindung sieht vor, dass der Geschwindigkeitsmesswert aus der mittels des Raddrehzahlsensors gemessenen Raddrehzahl ermittelt wird, solange eine Plausibilisierung der Raddrehzahl erfolgreich ist, und bei fehlgeschlagener Plausibilisierung aus der Drehzahl des Antriebsaggregats bestimmt wird. Idealerweise wird also die gemessene Raddrehzahl verwendet, um den Geschwindigkeitsmesswert zu bestimmen. Dies erfolgt so lange, wie die Plausibilisierung der Raddrehzahl erfolgreich ist. Unter der Plausibilisierung ist zu verstehen, dass die gemessene Raddrehzahl selbst oder ein anderer Parameter der Bremsanlage daraufhin überwacht wird, ob die Raddrehzahl der tatsächlichen Geschwindigkeit des Kraftfahrzeugs entspricht.

Beispielsweise wird hierzu geprüft, ob die gemessene Raddrehzahl in einem bestimmten Drehzahlbereich liegt, insbesondere von null verschieden ist. Der Parameter der Bremsanlage ist insbesondere ein Funktionsfähigkeitsparameter des Antiblockiersystems. Zeigt der Funktionsfähigkeitsparameter an, dass das Antiblockiersystem fehlerfrei arbeitet, so wird der Geschwindigkeitsmesswert aus der gemessenen Raddrehzahl ermittelt. Zeigt er hingegen an, dass ein Fehler vorliegt, so schlägt die Plausibilisierung fehl und der Geschwindigkeitsmesswert wird vorzugsweise aus der Drehzahl des Antriebsaggregats bestimmt. Diese Vorgehensweise liegt darin begründet, dass der Raddrehzahlsensor üblicherweise Bestandteil des Antiblockiersystems ist, sodass bei einem Nichtfunktionieren des Antiblockiersystems von einer Fehlfunktion des Raddrehzahlsensors ausgegangen wird. Die beschriebene Vorgehensweise ermöglicht das zuverlässige Ansteuern der Feststellbremseinrichtung in Abhängigkeit von dem Geschwindigkeitswert.

Eine Weiterbildung der Erfindung sieht vor, dass bei einem Überschreiten des Geschwindigkeitswerts durch den Geschwindigkeitsmesswert der Geschwindigkeitswert gleich dem Geschwindigkeitsmesswert gesetzt oder dem Geschwindigkeitsmesswert mit einem auf einen weiteren Geschwindigkeitsgradientengrenzwert begrenzten Geschwindigkeitsgradient nachgeführt wird. Erstere Vorgehensweise entspricht einem unmittelbaren Nachführen des Geschwindigkeitswerts in Abhängigkeit von dem Geschwindigkeitsmesswert. Im Rahmen der an zweiter Stelle genannten Vorgehensweise wird nicht nur bei dem Unterschreiten, sondern auch bei dem Überschreiten des Geschwindigkeitswerts durch den Geschwindigkeitsmesswert das Nachführen mit dem begrenzten Geschwindigkeitsgradienten umgesetzt. Hierbei wird für das Unterschreiten der Geschwindigkeitsgradientengrenzwert und für das Überschreiten der weitere Geschwindigkeitsgradientengrenzwert verwendet. Der Geschwindigkeitsgradientengrenzwert kann auch als erster Geschwindigkeitsgradientengrenzwert und der weitere Geschwindigkeitsgradientengrenzwert als zweiter Geschwindigkeitsgradientengrenzwert bezeichnet werden.

Der erste Geschwindigkeitsgradientengrenzwert und der zweite Geschwindigkeitsgradientengrenzwert können einander entsprechen oder aber voneinander verschieden sein, insbesondere hinsichtlich ihrer Absolutwerte. Beispielsweise ist der zweite Geschwindigkeitsgradientengrenzwert größer als der erste Geschwindigkeitsgradientengrenzwert. Vorzugsweise entspricht der zweite Geschwindigkeitsgradientengrenzwert dem ersten Geschwindigkeitsgradientengrenzwert multipliziert mit einem Faktor, welcher größer als eins ist. Bevorzugt beträgt der Faktor mindestens 2, mindestens 3, mindestens 4, mindestens 5 oder mindestens 6. Zusätzlich oder alternativ beträgt der Faktor höchstens 10, höchstens 8 oder höchstens 6. Anders ausgedrückt beträgt der Faktor beispielsweise mindestens 2 und höchstens 10, mindestens 3 und höchstens 8, mindestens 4 und höchstens 6 oder mindestens 4 und höchstens 6.

Beispielsweise beträgt der erste Geschwindigkeitsgradientengrenzwert mindestens 0,25 m/s² und höchstens 1,75 m/s², mindestens 0,5 m/s² und höchstens 1,5 m/s² oder mindestens 0,75 m/s² und höchstens 1,25 m/s². Bevorzugt beträgt der erste Geschwindigkeitsgradientengrenzwert genau oder in etwa 1 m/s². Diese Annahme geht davon aus, dass der Reibwert zwischen dem Rad und einem Untergrund des Kraftfahrzeugs stets mindestens 0,1 beträgt und folglich auch bei blockierendem Rad zumindest die genannte Verzögerung erzielt wird. Besonders bevorzugt wird von einer höheren möglichen Verzögerung ausgegangen, sodass der erste Geschwindigkeitsgradientengrenzwert mindestens 1 m/s² und höchstens 3 m/s² oder mindestens 1 m/s² und höchstens 2 m/s² beträgt. Insgesamt kann mit der beschriebenen Vorgehensweise das Ansteuern der Feststellbremseinrichtung besonders zuverlässig erfolgen.

Eine Weiterbildung der Erfindung sieht vor, dass der Geschwindigkeitsgradientengrenzwert und/oder der weitere Geschwindigkeitsgradientengrenzwert konstant festgelegt sind oder in Abhängigkeit von dem Geschwindigkeitswert ermittelt werden. Beispielsweise sind einer oder mehrere der genannten Geschwindigkeitsgradientengrenzwerte auf einen der genannten Werte beziehungsweise Wertebereiche festgelegt. Es kann jedoch auch vorgesehen sein, zumindest einen der Geschwindigkeitsgradientengrenzwerte variabel zu ermitteln, insbesondere in Abhängigkeit von dem Geschwindigkeitswert. Vorzugsweise wird der jeweilige Geschwindigkeitsgradientengrenzwert umso größer gewählt, je größer der Geschwindigkeitswert ist. In jedem Fall wird ein Geschwindigkeitswert erzielt, welcher durchgehend größer oder gleich der tatsächlichen Geschwindigkeit des Kraftfahrzeugs ist, sodass das Ansteuern der Feststellbremseinrichtung zuverlässig vorgenommen werden kann.

Eine Weiterbildung der Erfindung sieht vor, dass das Ermitteln des Geschwindigkeitswerts aus dem Geschwindigkeitsmesswert unter Begrenzung des Geschwindigkeitsgradienten in einer ersten Betriebsart durchgeführt wird und in einer zweiten Betriebsart der Geschwindigkeitswert ohne Begrenzung aus dem Geschwindigkeitsmesswert bestimmt wird. Die vorstehend beschriebene Vorgehensweise, bei welcher der Geschwindigkeitsgradient auf den Geschwindigkeitsgradientengrenzwert begrenzt wird, wird also lediglich in der ersten Betriebsart vorgenommen.

Zusätzlich zu der ersten Betriebsart ist jedoch die zweite Betriebsart umgesetzt, wobei zwischen den beiden Betriebsarten umgeschaltet werden kann. In der zweiten Betriebsart wird der Geschwindigkeitswert ohne Begrenzung aus dem Geschwindigkeitsmesswert ermittelt, insbesondere indem der Geschwindigkeitswert dem Geschwindigkeitsmesswert gleichgesetzt wird. Von Bedeutung ist hierbei, dass die zweite Betriebsart stets zu der ersten Betriebsart hinzutritt. Es ist also nicht vorgesehen, die Bremsanlage allein und durchgehend in der zweiten Betriebsart zu betreiben, sondern es ist stets ein Umschalten in die erste Betriebsart möglich. Die beschriebene Vorgehensweise ermöglicht ein zuverlässiges Ansteuern der Feststellbremseinrichtung, indem - falls notwendig - sinnvolle Annahmen zu dem Geschwindigkeitswert getroffen werden, jedoch zeitweise auch unmittelbar der Geschwindigkeitsmesswert als Geschwindigkeitswert herangezogen wird.

Eine Weiterbildung der Erfindung sieht vor, dass eine Diagnose eines Antiblockiersystems der Bremsanlage vorgenommen wird, wobei bei einem Erkennen auf einen Fehler des Antiblockiersystems die erste Betriebsart und bei fehlerfreiem Antiblockiersystem die zweite Betriebsart durchgeführt wird. Das Antiblockiersystem ist dazu vorgesehen und ausgestaltet, ein Blockieren des Rad des Kraftfahrzeugs zu verhindern. Hierzu wird mittels des Raddrehzahlsensors die Istdrehzahl des Rads ermittelt und bei einer Abweichung der Istdrehzahl von einer im Rahmen eines Modells bestimmten Solldrehzahl die auf das Rad wirkende Istbremskraft reduziert. Das Antiblockiersystem ist hierzu Bestandteil der Betriebsbremse oder der Betriebsbremse zumindest zugeordnet.

Solange das Antiblockiersystem zufriedenstellend arbeitet, kann angenommen werden, dass das Blockieren des Rads zuverlässig unterbunden wird. Liegt hingegen der Fehler des Antiblockiersystems vor, so ist dies möglicherweise nicht der Fall. Folgerichtig wird im Falle des Fehlers des Antiblockiersystems die erste Betriebsart herangezogen. Arbeitet das Antiblockiersystem jedoch fehlerfrei, so wird die zweite Betriebsart herangezogen, bei welcher der Geschwindigkeitswert ohne Begrenzung aus dem Geschwindigkeitsmesswert bestimmt wird. Hierdurch wird die Genauigkeit des Geschwindigkeitswerts verbessert.

Eine Weiterbildung der Erfindung sieht vor, dass als Feststellbremseinrichtung eine Feststellbremse und/oder eine Feststellsperre verwendet wird. Die Feststellbremse wirkt vorzugsweise unmittelbar auf das Rad des Kraftfahrzeugs. Die Feststellsperre ist hingegen beispielsweise Bestandteil eines Fahrzeuggetriebes des Kraftfahrzeugs, welches antriebstechnisch zwischen dem Antriebsaggregat und dem Rad angeordnet ist. Die Feststellsperre dient dem Festsetzen wenigstens einer Welle des Fahrzeuggetriebes, womit aufgrund der antriebstechnischen Anbindung des Rads an das Fahrzeuggetriebe auch das Rad festgesetzt ist. In jedem Fall wird ein zuverlässiges Festsetzen des Rads erzielt.

Die Erfindung betrifft weiterhin eine Bremsanlage für ein Kraftfahrzeug, insbesondere zur Durchführung des Verfahrens gemäß den Ausführungen im Rahmen dieser Beschreibung, wobei die Bremsanlage eine Feststellbremseinrichtung aufweist und ein Ansteuern der Feststellbremseinrichtung zum Erzeugen einer Feststellbremskraft auf ein Rad des Kraftfahrzeugs nur bei einem Unterschreiten eines Geschwindigkeitsschwellenwerts durch einen Geschwindigkeitswerts zugelassen wird. Dabei ist die Bremsanlage dazu vorgesehen und ausgestaltet, den Geschwindigkeitswert aus einem zumindest zeitweise mit einer Geschwindigkeit des Kraftfahrzeugs korrespondierenden Geschwindigkeitsmesswert zu ermitteln, wobei bei einem Unterschreiten des Geschwindigkeitswerts durch den Geschwindigkeitsmesswert der Geschwindigkeitswert dem Geschwindigkeitsmesswert mit einem auf einen Geschwindigkeitsgradientengrenzwert begrenzten Geschwindigkeitsgradienten nachgeführt wird. Dabei ist weiterhin vorgesehen, dass bei Vorliegen eines Ansteuersignals die Feststellbremseinrichtung zum Vergrößern einer von ihr erzeugten Istfeststellbremskraft angesteuert wird, falls der Geschwindigkeitswert kleiner ist als der Geschwindigkeitsschwellenwert, und zum Verringern oder Konstanthalten der Istfeststellbremskraft angesteuert wird, falls der Geschwindigkeitswert größer oder gleich dem Geschwindigkeitsschwellenwert ist.

Auf die Vorteile einer derartigen Ausgestaltung der Bremsanlage beziehungsweise einer derartigen Vorgehensweise wurde bereits hingewiesen. Sowohl die Bremsanlage als auch das Verfahren zu ihrem Betreiben können gemäß den Ausführungen im Rahmen dieser Beschreibung weitergebildet sein, sodass insoweit auf diese verwiesen wird.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein erstes Diagramm, in welchem rein beispielhaft eine tatsächliche Geschwindigkeit des Kraftfahrzeugs, ein Geschwindigkeitsmesswert und ein Geschwindigkeitswert über der Zeit aufgetragen sind,
- Figur 2: ein zweites Diagramm, in welchem die tatsächliche Geschwindigkeit, der Geschwindigkeitsmesswert und der Geschwindigkeitswert über der Zeit aufgetragen sind, sowie
- Figur 3: ein drittes Diagramm, in welchem erneut die tatsächliche Geschwindigkeit, der Geschwindigkeitsmesswert und der Geschwindigkeitswert über der Zeit aufgetragen sind.

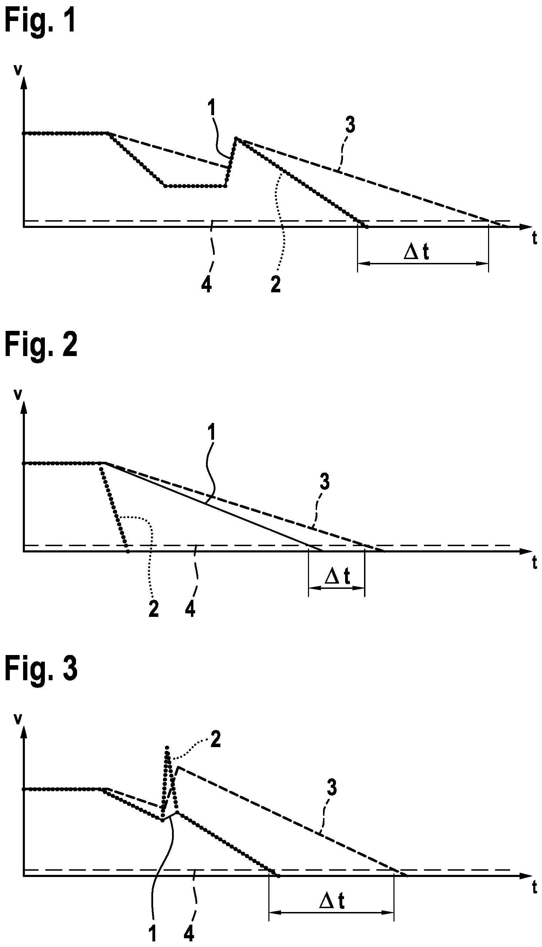

Die Figur 1 zeigt ein Diagramm, in welchem rein beispielhaft Geschwindigkeitsverläufe 1, 2 und 3 über der Zeit aufgetragen sind. Der Geschwindigkeitsverlauf 1 beschreibt hierbei eine tatsächliche Geschwindigkeit eines Kraftfahrzeugs, der Geschwindigkeitsverlauf 2 einen Geschwindigkeitsmesswert und der Geschwindigkeitsverlauf 3 einen aus dem Geschwindigkeitsmesswert ermittelten Geschwindigkeitswert. Ebenso angedeutet ist ein Geschwindigkeitsschwellenwert 4. Die beiden Geschwindigkeitsverläufe 1 und 2 stimmen überein. Das bedeutet, dass der Geschwindigkeitsmesswert stets mit der tatsächlichen Geschwindigkeit des Kraftfahrzeugs korrespondiert.

Der Geschwindigkeitswert gemäß dem Geschwindigkeitsverlauf 3 wird aus dem Geschwindigkeitsmesswert ermittelt. Dies erfolgt derart, dass bei einem Überschreiten des Geschwindigkeitswerts durch den Geschwindigkeitsmesswert der Geschwindigkeitswert gleich dem Geschwindigkeitsmesswert gesetzt wird. Unterschreitet hingegen der Geschwindigkeitsmesswert den Geschwindigkeitswert, so wird der Geschwindigkeitswert dem Geschwindigkeitsmesswert nachgeführt, nämlich mit begrenztem Geschwindigkeitsgradienten. Das Begrenzen des Geschwindigkeitsgradient erfolgt hierbei auf einen Geschwindigkeitsgradientengrenzwert.

Diese Vorgehensweise ist aus einem Vergleich zwischen den Geschwindigkeitsverläufen 1, 2 und 3 deutlich zu entnehmen. Bei einem Verzögern des Kraftfahrzeugs bis in den Stillstand gemäß dem Geschwindigkeitsverlauf 1 ergibt sich aufgrund des begrenzten Geschwindigkeitsgradienten ein langsamerer Abfall des Geschwindigkeitswerts im Vergleich mit dem Geschwindigkeitsmesswert. Folglich unterschreitet der Geschwindigkeitsverlauf 3 den Geschwindigkeitsschwellenwert 4 später als der Geschwindigkeitsverlauf 2, nämlich versetzt um einen Zeitversatz Δt.

Das beschriebene Verfahren zum Ermitteln des Geschwindigkeitswerts wird verwendet, um eine Feststellbremseinrichtung des Kraftfahrzeugs situationsgerecht anzusteuern. So soll das Ansteuern der Feststellbremseinrichtung zum Erzeugen einer Feststellbremskraft auf ein Rad des Kraftfahrzeugs nur zugelassen werden, sofern der Geschwindigkeitswert kleiner ist als der Geschwindigkeitsschwellenwert. Gegenüber einer Verwendung des Geschwindigkeitsmesswerts als Geschwindigkeitswert ergibt sich somit ein um den Zeitversatz Δt verzögertes Zulassen des Ansteuerns der Feststellbremse zum Erzeugen der Feststellbremskraft.

Die Figur 2 zeigt ein weiteres Diagramm, in welchem die Geschwindigkeitsverläufe 1, 2 und 3 sowie der Geschwindigkeitsschwellenwert 4 über der Zeit aufgetragen sind. Deutlich erkennbar ist, dass nun die Geschwindigkeitsverläufe 1 und 2 voneinander abweichen. Dies ist aufgrund eines Blockierens der Räder des Kraftfahrzeugs der Fall. Würde ausschließlich der Geschwindigkeitsmesswert herangezogen werden, um das bedarfsgerechte Ansteuern der Feststellbremseinrichtung vorzunehmen, so könnte mittels der Feststellbremseinrichtung die Feststellbremskraft auf die Radachse des Kraftfahrzeugs bereits erzeugt werden, bevor das Kraftfahrzeug tatsächlich eine Fahrgeschwindigkeit aufweist, welche kleiner ist als der Geschwindigkeitsschwellenwert. Da jedoch der Geschwindigkeitswert mit dem begrenzten Geschwindigkeitsgradienten aus dem Geschwindigkeitsmesswert ermittelt wird, ist trotz des Blockierens der Räder ein zuverlässiges Ansteuern der Feststellbremseinrichtung möglich. Dem Diagramm ist zu entnehmen, dass der Geschwindigkeitswert erst nach der tatsächlichen Geschwindigkeit des Kraftfahrzeugs den Geschwindigkeitsschwellenwert unterschreitet, nämlich um den Zeitversatz Δt versetzt.

Die Figur 3 zeigt ein Diagramm. In diesem sind wiederum die Geschwindigkeitsläufe 1, 2 und 3 sowie der Geschwindigkeitsschwellenwert über der Zeit aufgetragen. Bei dem Bestimmen des Geschwindigkeitswerts kommt jedoch ein erweitertes Verfahren zur Anwendung. Bei diesem wird nicht nur bei dem Unterschreiten des Geschwindigkeitswerts durch den Geschwindigkeitsmesswert das Begrenzen des Geschwindigkeitsgradienten vorgenommen, sondern auch bei dem Überschreiten.

Es ist erkennbar, dass der Geschwindigkeitsverlauf 2 zeitweise von dem Geschwindigkeitsverlauf 1 abweicht. In dem entsprechenden Zeitraum drehen die Räder des Kraftfahrzeugs durch. Da jedoch auch bei dem Überschreiten des Geschwindigkeitswerts durch den Geschwindigkeitsmesswert die Veränderung des Geschwindigkeitswerts nur mit dem begrenzten Geschwindigkeitsgradient erfolgt, läuft der Geschwindigkeitswert dem Geschwindigkeitsmesswert auch in diesem Zeitbereich verzögert nach. Hierdurch wird die Modellierung des Geschwindigkeitswerts verbessert und der Zeitversatz Δt im Gegensatz zu einer Vorgehensweise, bei bei welcher das Begrenzen des Geschwindigkeitsgradienten lediglich bei dem Unterschreiten des Geschwindigkeitswerts durch den Geschwindigkeitsmesswert erfolgt, verbessert.

Insgesamt ist mit dem beschriebenen Verfahrens zum Betreiben einer Bremsanlage für ein Kraftfahrzeug ein zuverlässiges Betreiben der Feststellbremseinrichtung möglich. Hierzu erfolgt ein Modellieren des Geschwindigkeitswerts, anhand welchem das Ansteuern der Feststellbremseinrichtung erfolgt. Durch physikalisch sinnvolle Annahmen zu einer maximal möglichen Beschleunigung und/oder einer maximal möglichen Verzögerung des Kraftfahrzeugs wird eine realistische Abschätzung des Geschwindigkeitswerts vorgenommen, welcher der tatsächlichen Geschwindigkeit des Kraftfahrzeugs stets nachläuft.

### BEZUGSZEICHENLISTE:

- 1: Verlauf der Geschwindigkeit
- 2: Verlauf des Geschwindigkeitsmesswerts
- 3: Verlauf des Geschwindigkeitswerts
- 4: Verlauf des Geschwindigkeitsschwellenwerts

## Patentansprüche

1. Verfahren zum Betreiben einer Bremsanlage für ein Kraftfahrzeug, wobei die Bremsanlage eine Feststellbremseinrichtung aufweist und ein Ansteuern der Feststellbremseinrichtung zum Erzeugen einer Feststellbremskraft auf ein Rad des Kraftfahrzeugs nur bei einem Unterschreiten eines Geschwindigkeitsschwellenwerts (4) durch einen Geschwindigkeitswert (3) zugelassen wird, wobei der Geschwindigkeitswert (3) aus einem zumindest zeitweise mit einer Geschwindigkeit (1) des Kraftfahrzeugs korrespondierenden Geschwindigkeitsmesswert (2) ermittelt wird, **dadurch gekennzeichnet, dass** bei einem Unterschreiten des Geschwindigkeitswerts (3) durch den Geschwindigkeitsmesswert (2) der Geschwindigkeitswert (3) dem Geschwindigkeitsmesswert (2) mit einem auf einen Geschwindigkeitsgradientengrenzwert begrenzten Geschwindigkeitsgradienten nachgeführt wird, wobei bei Vorliegen eines Ansteuersignals die Feststellbremseinrichtung zum Vergrößern einer von ihr erzeugten Istfeststellbremskraft angesteuert wird, falls der Geschwindigkeitswert (3) kleiner ist als der Geschwindigkeitsschwellenwert (4), und zum Verringern oder Konstanthalten der Istfeststellbremskraft angesteuert wird, falls der Geschwindigkeitswert (3) größer oder gleich dem Geschwindigkeitsschwellenwert (4) ist.

2. Verfahren nach Anspruch 1, **dadurch gekennzeichnet, dass** der Geschwindigkeitsmesswert (2) zumindest zeitweise aus einer mittels eines Raddrehzahlsensors gemessenen Raddrehzahl, und/oder zumindest zeitweise aus einer Drehzahl eines an die Radachse antriebstechnisch angeschlossenen Antriebsaggregats ermittelt wird.

3. Verfahren nach einem der vorhergehenden Ansprüche, **dadurch gekennzeichnet, dass** der Geschwindigkeitsmesswert (2) aus der mittels des Raddrehzahlsensors gemessenen Raddrehzahl ermittelt wird, solange eine Plausibilisierung der Raddrehzahl erfolgreich ist, und bei fehlgeschlagener Plausibilisierung aus der Drehzahl des Antriebsaggregats bestimmt wird.

4. Verfahren nach einem der vorhergehenden Ansprüche, **dadurch gekennzeichnet, dass** bei einem Überschreiten des Geschwindigkeitswerts (3) durch den Geschwindigkeitsmesswert (2) der Geschwindigkeitswert (3) gleich dem Geschwindigkeitsmesswert (2) gesetzt oder dem Geschwindigkeitsmesswert (2) mit einem auf einen weiteren Geschwindigkeitsgradientengrenzwert begrenzten Geschwindigkeitsgradienten nachgeführt wird.

5. Verfahren nach Anspruch 1 oder 4, **dadurch gekennzeichnet, dass** der Geschwindigkeitsgradientengrenzwert und/oder der weitere Geschwindigkeitsgradientengrenzwert konstant festgelegt sind oder in Abhängigkeit von dem Geschwindigkeitswert (3) ermittelt werden.

6. Verfahren nach einem der vorhergehenden Ansprüche, **dadurch gekennzeichnet, dass** das Ermitteln des Geschwindigkeitswerts (3) aus dem Geschwindigkeitsmesswert (2) unter Begrenzung des Geschwindigkeitsgradienten in einer ersten Betriebsart durchgeführt wird und in einer zweiten Betriebsart der Geschwindigkeitswert (3) ohne Begrenzung aus dem Geschwindigkeitsmesswert (2) bestimmt wird.

7. Verfahren nach Anspruch 6, **dadurch gekennzeichnet, dass** eine Diagnose eines Antiblockiersystems der Bremsanlage vorgenommen wird, wobei bei einem Erkennen auf einen Fehler des Antiblockiersystems die erste Betriebsart und bei fehlerfreiem Antiblockiersystem die zweite Betriebsart durchgeführt wird.

8. Verfahren nach einem der vorhergehenden Ansprüche, **dadurch gekennzeichnet, dass** als Feststellbremseinrichtung eine Feststellbremse und/oder eine Feststellsperre verwendet wird.

9. Bremsanlage für ein Kraftfahrzeug, zur Durchführung des Verfahrens nach einem oder mehreren der vorhergehenden Ansprüche, wobei die Bremsanlage eine Feststellbremseinrichtung aufweist und ein Ansteuern der Feststellbremseinrichtung zum Erzeugen einer Feststellbremskraft auf ein Rad des Kraftfahrzeugs nur bei einem Unterschreiten eines Geschwindigkeitsschwellenwerts (4) durch einen Geschwindigkeitswert (3) zugelassen wird, wobei die Bremsanlage dazu vorgesehen und ausgestaltet ist, den Geschwindigkeitswert (3) aus einem zumindest zeitweise mit einer Geschwindigkeit (1) des Kraftfahrzeugs korrespondierenden Geschwindigkeitsmesswert (2) zu ermitteln, **dadurch gekennzeichnet, dass** bei einem Unterschreiten des Geschwindigkeitswerts (3) durch den Geschwindigkeitsmesswert (2) der Geschwindigkeitswert (3) dem Geschwindigkeitsmesswert (2) mit einem auf einen Geschwindigkeitsgradientengrenzwert begrenzten Geschwindigkeitsgradienten nachgeführt wird, wobei bei Vorliegen eines Ansteuersignals die Feststellbremseinrichtung zum Vergrößern einer von ihr erzeugten Istfeststellbremskraft angesteuert wird, falls der Geschwindigkeitswert (3) kleiner ist als der Geschwindigkeitsschwellenwert (4), und zum Verringern oder Konstanthalten der Istfeststellbremskraft angesteuert wird, falls der Geschwindigkeitswert (3) größer oder gleich dem Geschwindigkeitsschwellenwert (4) ist.

## Claims

1. Method for operating a brake system for a motor vehicle, wherein the brake system has a parking brake apparatus and control of the parking brake apparatus for producing a parking brake force on a wheel of the motor vehicle is permitted only when a speed value (3) falls below a speed threshold value (4), wherein the speed value (3) is established from a speed measurement value (2) which at least sometimes corresponds to a speed (1) of the motor vehicle, **characterized in that,** when the speed measurement value (2) falls below the speed value (3), the speed value (3) is tracked to the speed measurement value (2) with a speed gradient which is limited to a speed gradient limit value, wherein, when a control signal is present, the parking brake apparatus is controlled to increase an actual parking braking force which is produced by it if the speed value (3) is smaller than the speed threshold value (4) and to decrease or keep the actual parking braking force constant if the speed value (3) is greater than or equal to the speed threshold value (4).

2. Method according to claim 1, **characterized in that**the speed measurement value (2) is established at least sometimes from a wheel speed which is measured by means of a wheel speed sensor and/or at least sometimes from a speed of a drive unit which is connected in technical driving terms to the wheel axle.

3. Method according to any one of the preceding claims, **characterized in that**the speed measurement value (2) is established from the wheel speed measured by means of the wheel speed sensor as long as a plausibility check of the wheel speed is successful and, if the plausibility check fails, is determined from the speed of the drive unit.

4. Method according to any one of the preceding claims, **characterized in that,** when the speed measurement value (2) exceeds the speed value (3), the speed value (3) is set equal to the speed measurement value (2) or is tracked to the speed measurement value (2) with a speed gradient which is limited to an additional speed gradient limit value.

5. Method according to claim 1 or 4, **characterized in that** the speed gradient limit value and/or the additional speed gradient limit value is fixed to be constant or is established in dependence with the speed value (3).

6. Method according to any one of the preceding claims, **characterized in that** the establishment of the speed value (3) from the speed measurement value (2) with the speed gradient being limited is carried out in a first operating mode and, in a second operating mode, the speed value (3) is determined without limitation from the speed measurement value (2).

7. Method according to claim 6, **characterized in that** a diagnosis of an anti-lock braking system of the brake system is carried out, wherein, when an error of the anti-lock braking system is identified, the first operating mode is carried out and, in the event of an error-free anti-lock braking system, the second operating mode is carried out.

8. Method according to any one of the preceding claims, **characterized in that** a parking brake and/or a parking lock is used as a parking brake apparatus.

9. Brake system for a motor vehicle, for carrying out the method according to one or more of the preceding claims, wherein the brake system has a parking brake apparatus and control of the parking brake apparatus for producing a parking brake force on a wheel of the motor vehicle is permitted only when a speed value (3) falls below a speed threshold value (4), wherein the brake system is provided and configured to establish the speed value (3) from a speed measurement value (2) which at least sometimes corresponds to a speed (1) of the motor vehicle, **characterized in that,** when the speed measurement value (2) falls below the speed value (3), the speed value (3) is tracked to the speed measurement value (2) with a speed gradient which is limited to a speed gradient limit value, wherein, when a control signal is present, the parking brake apparatus is controlled to increase an actual parking braking force which is produced thereby if the speed value (3) is smaller than the speed threshold value (4) and to decrease or keep the actual parking braking force constant if the speed value (3) is greater than or equal to the speed threshold value (4).

## Revendications

1. Procédé de fonctionnement d'une installation de freinage pour un véhicule automobile, dans lequel l'installation de freinage présente un dispositif de frein de stationnement et une commande du dispositif de frein de stationnement est autorisée pour la génération d'une force de frein de stationnement sur une roue du véhicule automobile seulement en cas de non atteinte d'une valeur seuil de vitesse (4) par une valeur de vitesse (3), dans lequel la valeur de vitesse (3) est déterminée à partir d'une valeur de mesure de vitesse (2) correspondant au moins temporairement à une vitesse (1) du véhicule automobile, **caractérisé en ce qu'**en cas de non atteinte de la valeur de vitesse (3) par la valeur de mesure de vitesse (2), la valeur de vitesse (3) est ajustée à la valeur de mesure de vitesse (2) avec un gradient de vitesse limité à une valeur limite de gradient de vitesse, dans lequel en présence d'un signal de commande, le dispositif de frein de stationnement est commandé pour augmenter une force de frein de stationnement réelle générée par celui-ci au cas où la valeur de vitesse (3) est inférieure à la valeur seuil de vitesse (4), et pour diminuer ou maintenir constante la force de frein de stationnement réelle au cas où la valeur de vitesse (3) est supérieure ou égale à la valeur seuil de vitesse (4).

2. Procédé selon la revendication 1, **caractérisé en ce que** la valeur de mesure de vitesse (2) est déterminée au moins temporairement à partir d'une vitesse de rotation de roue mesurée au moyen d'un capteur de vitesse de rotation de roue, et/ou au moins temporairement à partir d'une vitesse de rotation d'un groupe d'entraînement raccordé en entraînement à l'essieu de roue.

3. Procédé selon l'une quelconque des revendications précédentes, **caractérisé en ce que** la valeur de mesure de vitesse (2) est déterminée à partir de la vitesse de rotation de roue mesurée au moyen du capteur de vitesse de rotation de roue tant qu'un contrôle de la vraisemblance de la vitesse de rotation de roue est réussi, et en cas d'échec du contrôle de la vraisemblance est définie à partir de la vitesse de rotation du groupe d'entraînement.

4. Procédé selon l'une quelconque des revendications précédentes, **caractérisé en ce qu'**en cas de dépassement de la valeur limite (3) par la valeur de mesure de vitesse (2), la valeur de vitesse (3) est définie de manière à être égale à la valeur de mesure de vitesse (2) ou est ajustée à la valeur de mesure de vitesse (2) avec un gradient de vitesse limité à une autre valeur limite de gradient de vitesse.

5. Procédé selon la revendication 1 ou 4, **caractérisé en ce que** la valeur limite de gradient de vitesse et/ou l'autre valeur limite de gradient de vitesse est fixée de manière constante ou est déterminée en fonction de la valeur de vitesse (3).

6. Procédé selon l'une quelconque des revendications précédentes, **caractérisé en ce que** la détermination de la valeur limite (3) est réalisée à partir de la valeur de mesure de vitesse (2) en limitant le gradient de vitesse dans un premier mode de fonctionnement et dans un second mode de fonctionnement, la valeur de vitesse (3) est déterminée sans limitation à partir de la valeur de mesure de vitesse (2).

7. Procédé selon la revendication 6, **caractérisé en ce qu'**un diagnostic d'un système antiblocage de l'installation de freinage est entrepris, dans lequel lors d'une détection d'une panne du système antiblocage, le premier mode de fonctionnement est exécuté et en cas de système antiblocage exempt de panne, le second mode de fonctionnement est exécuté.

8. Procédé selon l'une quelconque des revendications précédentes, **caractérisé en ce qu'**un frein de stationnement et/ou un verrou de blocage est utilisé comme dispositif de frein de stationnement.

9. Installation de freinage pour un véhicule automobile pour la réalisation du procédé selon l'une ou plusieurs quelconques des revendications précédentes, dans laquelle l'installation de freinage présente un dispositif de frein de stationnement et une commande du dispositif de frein de stationnement est autorisée pour la génération d'une force de frein de stationnement sur une roue du véhicule automobile seulement en cas de non atteinte d'une valeur seuil de vitesse (4) par une valeur de vitesse (3), dans laquelle l'installation de freinage est prévue et configurée afin de déterminer la valeur de vitesse (3) à partir d'une valeur de mesure de vitesse (2) correspondant au moins temporairement à une vitesse (1) du véhicule automobile, **caractérisée en ce qu'**en cas de non atteinte de la valeur de vitesse (3) par la valeur de mesure de vitesse (2), la valeur de vitesse (3) est ajustée à la valeur de mesure de vitesse (2) avec un gradient de vitesse limité à une valeur limite de gradient de vitesse, dans laquelle en présence d'un signal de commande, le dispositif de frein de stationnement est commandé pour augmenter une force de frein de stationnement réelle générée par celui-ci au cas où la valeur de vitesse (3) est inférieure à la valeur seuil de vitesse (4), et pour diminuer ou maintenir constante la force de frein de stationnement réelle au cas où la valeur de vitesse (3) est supérieure ou égale à la valeur seuil de vitesse (4).
